# EUROPEAN PATENT SPECIFICATION

(11) **EP 3 737 649 B1**
(45) Date of publication and mention of the grant of the patent: **20.12.2023**
(21) Application number: 19738379.7
(22) Date of filing: 10.01.2019
(51) Int. Cl.: C03B 5/187, C03B 5/23, C03B 7/06, C03B 5/16

(54) **GLASS PRODUCT MANUFACTURING APPARATUS**
VORRICHTUNG ZUR HERSTELLUNG VON GLASPRODUKTEN
APPAREIL DE FABRICATION DE PRODUIT EN VERRE

(30) Priority: 11.01.2018 KR 20180004050
(43) Date of publication of application: 18.11.2020
(73) Proprietor: Corning Incorporated, Corning, New York 14831 (US)
(72) Inventor: MOON, Sunwoo, Cheonan-si Chungcheongnam-do 31156 (KR); PARK, Youngsoo, Asan-si Chungcheongnam-do 31455 (KR)
(74) Representative: Elkington and Fife LLP
(86) International application number: PCT/KR2019/000386
(87) International publication number: WO 2019/139372

(56) References cited:
- WO-A2-2016/179374
- WO-A2-2016/179374
- JP-A- 2002 274 857
- US-A1- 2010 242 543
- US-A1- 2011 289 967
- US-A1- 2015 107 306
- US-A1- 2015 197 440
- US-A1- 2016 060 154

## Description

### 2. TECHNICAL FIELD

The present disclosure relates to a glass product manufacturing apparatus, and more particularly, to a glass product manufacturing apparatus having improved cooling and manufacturing efficiency.

### 3. Description of the Related Art

Molten glass is generated by melting a batch material and is further processed, e.g., fined, stirred, and formed, to produce glass products. When the molten glass is processed, the molten glass is heated to a high temperature and is then conveyed to other apparatuses for carrying out various processes. The temperature of the molten glass needs to be precisely controlled to be suitable for each process step. For this purpose, much research has been conducted on how to properly control the temperature of the molten glass. WO2016179374 describes an apparatus and methods for processing molten material. US2015107306 describes a glass melting apparatus. JP2002274857 A describes a glass manufacturing apparatus including a stirrer and a conduit for delivering molten glass from the stirrer that is cooled by blowing a cooling medium against it.

### SUMMARY

According to an aspect of the invention there is provided a glass manufacturing apparatus according to claim 1.

The nozzle may be connected to a nitrogen source.

The nitrogen source may provide nitrogen that has not passed through the environmental control unit, to the nozzle.

The environment control unit may be connected to the chamber and further configured to supply the chamber with a fluid having a predetermined humidity, temperature, and atmospheric composition ratio.

The environment control unit may be further configured to provide a fluid to the chamber, wherein the fluid jetted by the nozzle and the fluid provided by the environment control unit are different from each other.

The fluid jetted by the nozzle and the fluid provided by the environmental control unit may differ in at least one of a temperature, a humidity, and an atmospheric composition ratio.

The glass manufacturing apparatus may further include a first controller configured to control the environment control unit and a second controller configured to control a flow of the fluid jetted by the nozzle.

The first controller and the second controller may be separate from each other.

The nozzle is configured to jet the fluid in a direction substantially perpendicular to a horizontal plane.

The nozzle is configured to jet the fluid at an angle with respect to a horizontal plane.

According to a second aspect of the invention there is provided a glass manufacturing apparatus according to claim 10.

The plurality of nozzles may be arranged at substantially equal intervals along an extension direction of the conduit.

The plurality of nozzles may be arranged at different intervals along an extension direction the conduit.

The plurality of nozzles may be arranged at substantially equal intervals along an extension direction of extension of the conduit.

The plurality of nozzles may be arranged at different intervals along an extension direction of extension of the conduit.

At least some of the plurality of nozzles may be disposed above the conduit.

At least some of the plurality of nozzles may be disposed below the conduit.

### DESCRIPTION OF THE DRAWINGS

FIGS. 1A to 1I are schematic drawings for explaining a glass manufacturing apparatus according to some embodiments;
FIG. 2 is a graph for illustrating the effect of the glass manufacturing apparatus according to an experimental example;
FIG. 3A and FIG.3B are schematic drawings for explaining a glass manufacturing apparatus according to some examples; and
FIG. 4 is a flow chart for explaining a glass manufacturing method according to some examples. FIGS. 1A-1I are embodiments of the invention. FIGS. 2, 3A, 3B and 4 represent subject-matter that is not an embodiment of the invention as presently claimed.

### DETAILED DESCRIPTION

The disclosure will now be described more fully with reference to the accompanying drawings, in which example embodiments are shown. The subject matter of the disclosure may, however, be embodied in many different forms and should not be construed as being limited to the example embodiments set forth herein. Rather, these embodiments are provided so that the disclosure will convey the subject matter to those skilled in the art. In the drawings, the thicknesses of layers and regions may be exaggerated for clarity. Wherever possible, like reference numerals in the drawings will denote like elements. Therefore, the disclosure is not limited by relative sizes or intervals as shown in the accompanied drawings.

While such terms as "first," "second," etc., may be used to describe various components, such components are not limited to the above terms. The above terms are used only to distinguish one component from another. For example, a first component may indicate a second component or a second component may indicate a first component without conflicting.

The terms used herein in various example embodiments are used to describe example embodiments only, and should not be construed to limit the various additional embodiments. Singular expressions, unless defined otherwise in contexts, include plural expressions. The terms "comprises" or "may comprise" used herein in various example embodiments may indicate the presence of a corresponding function, operation, or component and do not limit one or more additional functions, operations, or components. It will be further understood that the terms "comprises" and/or "comprising," when used in this specification, may be used to specify the presence of stated features, integers, steps, operations, elements, and/or components, but do not preclude the presence or addition of one or more other features, integers, steps, operations, elements, components, and/or groups thereof. Also, expressions such as "at least one of", when preceding a list of elements, modify the entire list of elements and do not modify the individual elements of the list.

When a certain embodiment may be implemented differently, a specific process order may be performed differently from the described order. For example, two consecutively described processes may be performed substantially at the same time or performed in an order opposite to the described order.

Variations from the shapes of the illustrations as a result, for example, of manufacturing techniques and/or tolerances, are to be expected. Thus, embodiments of the disclosure should not be construed as limited to the particular shapes of regions illustrated herein, but are to include deviations in shapes that result, for example, from manufacturing. As used herein, the term "and/or" includes any and all combinations of one or more of the associated listed items.

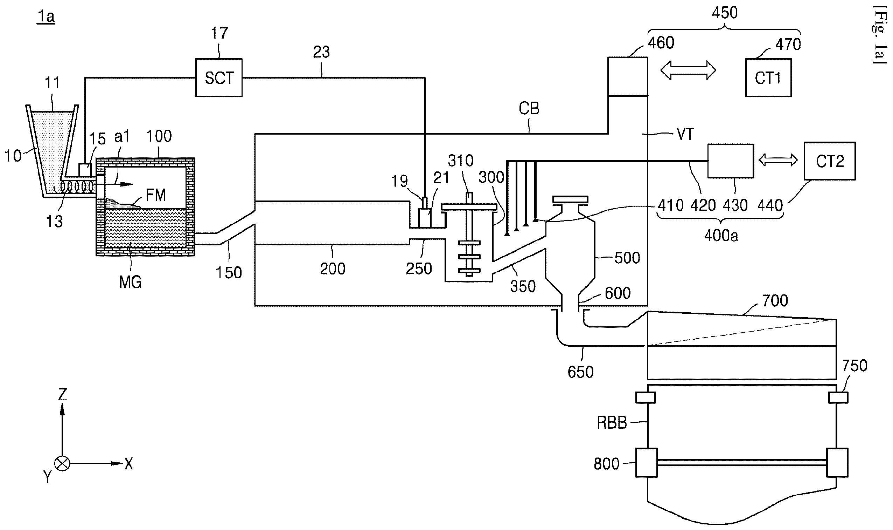

FIG. 1A to 1I are sectional views schematically illustrating a glass manufacturing apparatus 1a according to some embodiments.

Referring to FIG. 1A, according to some embodiments, a glass manufacturing apparatus 1a may include a melting vessel 100, a fining vessel 200, a stirring vessel 300, a cooling system 400a, an environmental control system 450, a delivery vessel 500, and a forming apparatus 700. According to some embodiments, the glass manufacturing apparatus 1a may manufacture sheet type glass.

The melting vessel 100, the fining vessel 200, the stirring vessel 300, the delivery vessel 500, and the forming apparatus 700 may be glass manufacturing process stations located in series. Predetermined processes for manufacturing glass products are performed at these stations. According to some embodiments, manufacturing processes may include a down-draw process and a slot-draw fusion-forming process. According to some embodiments, fabrication processes may include a double fusion process and a float glass forming process.

According to some embodiments, each of the melting vessel 100, the fining vessel 200, the stirring vessel 300, the delivery vessel 500, and the forming apparatus 700 may include platinum-containing metals such as platinum or platinum-rhodium, platinum-iridium, and combinations thereof. According to some embodiments, each of the melting vessel 100, the fining vessel 200, the agitation vessel 300, the delivery vessel 500, and the forming apparatus 700 may include palladium, rhenium, ruthenium, and osmium, and other refractory metals. According to some embodiments, the forming apparatus 700 may include a ceramic material or a glass-ceramic refractory material

The melting vessel 100 may receive a batch material 11 from a storage vessel 10. The batch material 11 may be inserted in the storage vessel 10 by a batch delivery apparatus 13 powered by a drive device 15. A selective controller 17 may be configured to operate the drive device 15to insert a desired amount of the batch material 11 into the melting vessel 100 as indicated by an arrow a1. According to some embodiments, a glass level probe 19 may be used to measure a level of molten glass MG in a standpipe 21 and to transmit the measured level of molten glass MG to the controller 17 through a communication line 23.

The melting vessel 100 may heat and melt the batch material 11. When the batch material 11 is melted in the melting vessel 100, a bubble FM may be formed. The melting vessel 100 may be configured to receive the molten glass MG produced by melting the batch material 11 from the storage vessel 10. The batch material 11 is a glass raw material. According to some embodiments, a fining agent such as a tin oxide may be added to the batch material 11.

According to some embodiments, the fining vessel 200 may be connected to the melting vessel 100 by a first conduit 150. The first conduit 150 may include an inner space that is a passage through which the molten glass MG may flow. Second and third conduits 250 and 350 described below may also provide a passage through which the molten glass MG may flow. The first to third conduits 150, 250, and 350 may each include a material having electrical conductivity and usable at a high temperature condition. According to some embodiments, the first to third conduits 150, 250, and 350 may each include a platinum-containing metal, e.g., platinum, platinum-rhodium, platinum-iridium, or a combination thereof. According to some embodiments, the first to third conduits 150, 250, and 350 may each include a refractory metal, e.g., molybdenum, palladium, rhenium, tantalum, titanium, tungsten, ruthenium, osmium, zirconium, or an alloy thereof, and/or zirconium dioxide.

According to some embodiments, the third conduit 350 may have a hollow, approximately cylindrical, or hollow, approximately elliptic cylindrical shape. However, this embodiment is not limited thereto, and if necessary, the third conduit 350 may have a hollow quadrangular prism shape or a square quadrangular prism shape with rounded corners.

According to some embodiments, the fining vessel 200 serves as a refining tube. According to some embodiments, the fining vessel 200 may be located downstream of the melting vessel 100. The fining vessel 200 may receive the molten glass MG from the melting vessel 100. According to some embodiments, a high temperature process may be performed in the fining vessel 200 to remove blisters from the molten glass MG. According to some embodiments, the fining vessel 200 is configured to remove blisters from the molten glass MG while the molten glass MG passes through the fining vessel 200 by heating the molten glass MG. According to some embodiments, as the molten glass MG is heated in the fining vessel 200, the fining agent contained in the molten glass MG may cause a redox reaction, thereby oxygen being removed from the molten glass MG. Specifically, the blisters contained in the molten glass MG may include oxygen, carbon dioxide, and/or sulfur dioxide and may be combined with oxygen generated in the reduction reaction of the fining agent, and thus, a volume of the blister may increase. The grown blisters may float toward the free surface of the molten glass MG in the fining vessel 200 and be separated from the molten glass MG. The blisters may be discharged outside the fining vessel 200 through a gas-phase space at an upper part of the fining vessel 200.

The delivery vessel 500 may be located downstream of the stirring vessel 300. The delivery vessel 500 may be connected to the stirring vessel 300 by a third conduit 350. An outlet conduit 600 may be connected to the delivery vessel 500. The molten glass MG may be transferred to the inlet 650 of the forming apparatus 700 through the outlet conduit 600.

The forming apparatus 700 may receive the molten glass MG from the delivery vessel 500. The forming apparatus 700 may form the molten glass MG into a sheetshaped glass product. For example, the forming apparatus 700 may include a fusion drawing machine for forming the molten glass MG. Part of the molten glass MG flowing into the forming apparatus 700 may overflow in the forming apparatus 700. The overflowing molten glass MG moves in a downward direction by gravity and a combination of suitably arranged rolls such as edge roll 750 and pulling rolls 800 to form molten glass ribbon RBB.

According to some embodiments, the stirring vessel 300 may be located downstream of the fining vessel 200. The stirring vessel 300 may homogenize the molten glass MG supplied from the fining vessel 200. A stirrer 310 may be positioned in the stirring vessel 300, to rotate relative to the stirring vessel 300 to make the molten glass MG flow therein. The stirrer 310 may stir the molten glass MG in such a manner that components of the molten glass MG are uniformly distributed.

The glass manufacturing apparatus 1a may be configured to heat the molten glass MG passing through the first conduit 150 in such a manner that the molten glass MG is maintained above a predetermined temperature until the molten glass MG reaches the fining vessel 200. For example, cooling of the molten glass MG may be prevented by supplying to the molten glass MG flowing through the first conduit 150 an amount of heat equal to or greater than heat loss due to conduction and convection of heat from the molten glass MG flowing through the first conduit 150. According to some embodiments, the molten glass MG passing through the first conduit 150 may have a higher temperature than the molten glass MG contained in the melting vessel 100. According to some embodiments, the molten glass MG passing through the first conduit 150 may have a lower temperature than the molten glass MG contained in the fining vessel 200.

The glass manufacturing apparatus 1a may be configured to directly heat the molten glass MG flowing along the first conduit 150. Specifically, the first conduit 150 may be configured to allow a current to flow there through. Due to the first conduit 150 heated by the current, the molten glass MG flowing along the first conduit 150 may be heated.

According to some embodiments, to apply the current to the first conduit 150, the glass manufacturing apparatus 1a may include flanges connected to the first conduit 150 and a power source electrically connected to the flanges through cables. According to some embodiments the power source may generate an alternating current or a direct current. The flanges may be provided in a plural number. For example, two flanges may be provided at two ends of the first conduit 150. However, according to some embodiments, the glass manufacturing apparatus la may include an external heat source for heating the first conduit 150.

According to embodiments, the glass manufacturing apparatus la includes a chamber CB. According to some embodiments, the chamber CB may have an inner space in which the fining vessel 200, the stirring vessel 300, and the delivery vessel 500 may be disposed. According to some embodiments, the storage vessel 10, the melting vessel 100, the first conduit 150, and the forming apparatus 700 may be disposed outside the chamber CB. According to some embodiments, the second conduit 250 and the third conduit 350 may be disposed in the chamber CB. According to some embodiments, the chamber CB may have a substantially rectangular parallelepiped shape, but is not limited thereto. Since precise environmental control is required to make high quality glass, precise control of the environment of the vessels corresponding to each process and the conduit connecting the vessels is necessary. According to some embodiments, the chamber CB may provide precise control of the process environment by separating the atmosphere around the conduit and the vessel containing the molten glass MG from the normal atmosphere during the fining process and subsequent processes. According to some embodiments, the chamber CB is configured to separate the atmosphere around the fining vessel 200, the second conduit 250, the stirring vessel 300, the third conduit 350, and the delivery vessel 500 from the atmosphere outside the chamber CB.

For convenience of description, embodiments will be described below on the assumption that the chamber CB has a substantially rectangular parallelepiped shape. However, those skilled in the art will readily understand that these embodiments may be applied in substantially the same manner to a chamber CB having other various shapes.

For convenience of explanation, first to third directions (X, Y, and Z directions) are defined as follows. When the chamber CB has a substantially rectangular parallelepiped shape, the first direction (the X direction) and the second direction (the Y direction) may be parallel to the bottom surface of the chamber CB. The first direction (the X direction) may be a direction in which the molten glass MG substantially moves in accordance with the progress of the process. The second direction (the Y direction) may be a direction substantially perpendicular to the first direction (the X direction). The second direction (the Y direction) may correspond to a direction perpendicular to the drawing in the sectional view. The third direction (the Z direction) may be a direction substantially perpendicular to the first direction (the X direction) and the second direction (the Y direction)

According to some embodiments, the glass manufacturing apparatus 1a may also include an environmental control system 450. The environmental control system 450 may be configured to control the environment in the chamber CB. According to some embodiments, the environmental control system 450 may be configured to control the atmosphere in the chamber CB. According to some embodiments, the environmental control system 450 may control at least one of a temperature, a humidity, and atmospheric composition ratio in the chamber CB. According to some embodiments, the environmental control system 450 may include an environmental control unit 460 and a first controller 470.

According to some embodiments, the environment control unit 460 may provide a fluid to the chamber CB. According to some embodiments, the environment control unit 460 may supply a fluid having a predetermined condition. According to some embodiments, the environment control unit 460 may supply a fluid having a predetermined humidity, temperature, and atmospheric composition ratio to the chamber CB. According to some embodiments, the environment control unit 460 may supply a fluid to the chamber CB through the fluid inlet VT provided in the chamber CB. According to some embodiments, the environmental control unit 460 may include a cooling coil, a heating coil, a humidifier, and a gas source capable of providing various gases. The various gases may be nitrogen or oxygen.

The first controller 470 may include a processor capable of issuing various commands to the environment control unit 460 to control the environment of the chamber CB. According to some embodiments, the first controller 470 may send an instruction to the environment control unit 460 to control the environment in the chamber CB. The first controller 470 may be a computing device, such as a workstation computer, a desktop computer, a laptop computer, a tablet computer, or the like. The first controller 470 may store software for performing functions such as receiving feedback on the environment within the chamber, receiving measurement data, adjusting the environment, and the like. According to some embodiments, the first controller 470 may send an instruction to the environment control unit 460 to control the atmosphere in the chamber CB. According to some embodiments, the first controller 470 may send an instruction to the environmental control unit 460 to control at least one of the temperature, the humidity, and the atmospheric composition ratio of the chamber CB.

According to some embodiments, the glass manufacturing apparatus 1a may include a direct cooling system 400a. According to some embodiments, the direct cooling system 400a includes at least one nozzle 410, a fluid source 430 configured to supply a fluid to the nozzle 410, a fluid conduit 420 connecting the nozzle 410 to the fluid source 430, and a second controller 440 that controls the direct cooling system 400a.

According to embodiments, the nozzle 410 is disposed in the chamber CB. According to some embodiments, the nozzle 410 may be disposed adjacent to the third conduit 350. According to some embodiments, the nozzle 410 is configured to jet a fluid around the third conduit 350.

According to some embodiments, the nozzle 410 may be aligned toward the third conduit 350. According to some embodiments, the third conduit 350 may be disposed along a direction in which the nozzle 410 emits fluid substantially. According to some embodiments, the nozzle 410 may jet the fluid at a bottom surface of the chamber CB, or in a direction substantially perpendicular to the horizontal plane, e.g., the third direction (the Z direction). According to some embodiments, the nozzle 410 may be disposed above the third conduit 350. According to some embodiments, the nozzle 410 may vertically overlap the third conduit 350. According to some embodiments, the nozzle 410 may be configured to jet the fluid directly toward the third conduit 350. A direct jet of the fluid toward the third conduit 350 indicates that the jetted fluid reaches the third conduit 350 while travelling substantially in the same direction as the direction in which it was initially jetted. However, this description does not exclude other situations in which the jetted fluid reaches the conduit 350 while travelling not in the same direction in which it was initially jetted.

According to some embodiments, the nozzle 410 may uniformly jet the fluid around the third conduit 350. According to some embodiments, the nozzle 410 may jet the fluid such that a temperature change of the molten glass MG along the first direction (the X direction) is uniform. Herein, the uniformity of the temperature change along the first direction (the X direction) of the molten glass MG indicates that the temperature of the molten glass MG is dependent on the first direction (the X direction), but is not substantially dependant on the second direction (the Y direction).

According to some embodiments, the fluid jetted by the nozzle 410 may spread to reach a predetermined area. According to some embodiments, the nozzle 410 may jet the fluid in a spraying manner. The jetted fluid may be radiated horizontally. According to some embodiments, the fluid jetted from each of the nozzles 410 may reach a region having a predetermined area of the surface of the third conduit 350. According to some embodiments, the fluid jetted by the nozzle 410 may reach at least a portion of the upper surface of the third conduit 350. According to some embodiments, the area covered by the fluid jetted by the nozzle 410 may be equal to or greater than an area of the top surface of the third conduit 350. According to some embodiments, the fluid jetted by the nozzle 410 may substantially cover the entire upper surface of the third conduit 350. The upper surface may be the outer surface of the portion of the third conduit 350 located above the plane passing through the center of the conduit 350 and parallel to the extending direction. Alternatively, the upper surface may refer to a portion of the outer surface of the third conduit 350 facing the ceiling of the chamber CB. When the extension line of the normal line of the specific portion of the third conduit 350 is brought into contact with the plane extending the ceiling of the chamber CB, the specific portion of the third conduit 350 and the chamber CB face each other. However, the above descriptions of the upper surface of the conduit 350 are for the sake of understanding and do not exclude other situations regarding the surface of the conduit 350 covered by the fluid jetted by the nozzle 410. In some cases, some of the fluid jetted by the nozzle 410 may reach the lower surface of the third conduit 350. The meaning of the lower surface may be similar to that of the upper surface described above.

According to some embodiments, the nozzle 410 may comprise a plurality of nozzles. According to some embodiments, the plurality of nozzles 410 is arranged along a direction. According to some embodiments, the plurality of nozzles 410 may be arranged along the first direction (the X direction).

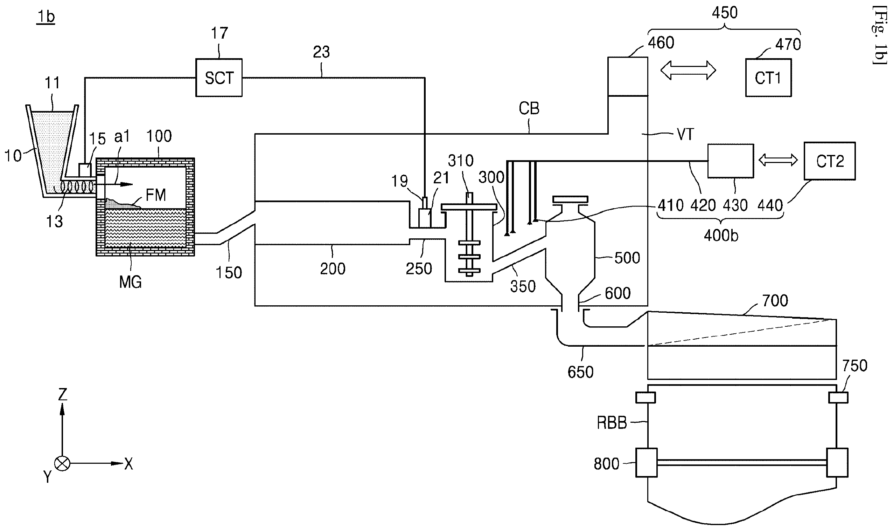

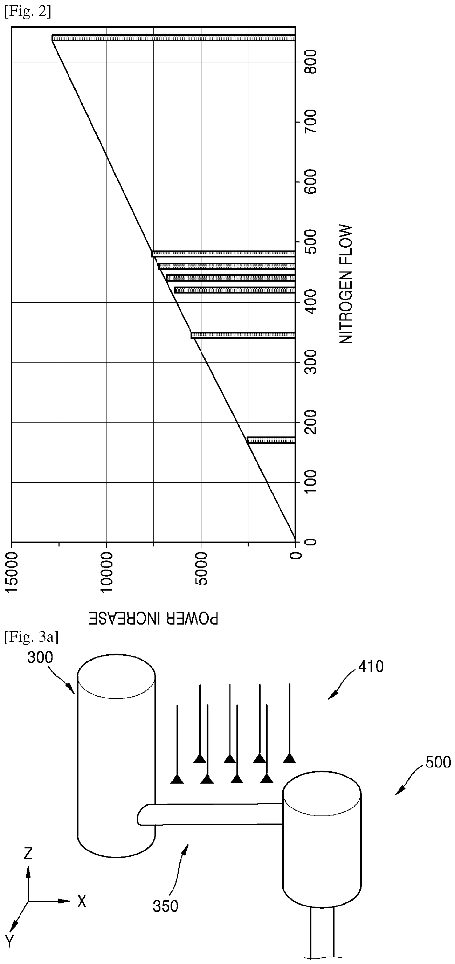

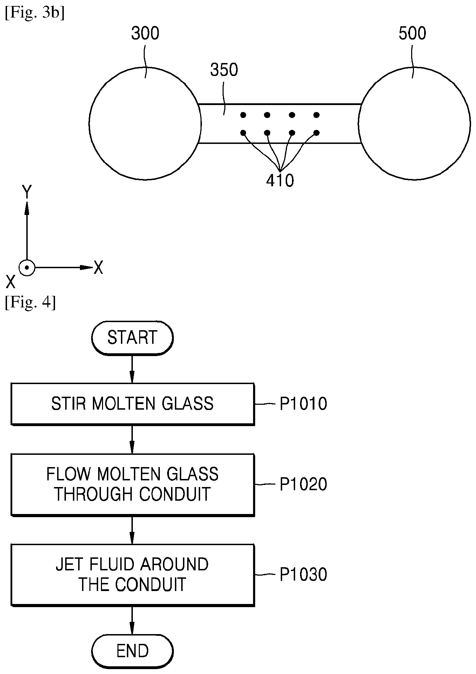

However, the arrangement of the nozzles 410 is not limited thereto. According to other embodiments, the arrangement of the nozzles 410 may differ from that of FIG. 1A. This will be described below with reference to FIGS. 1B to 1I and FIG. 3A and 3B.

Referring to FIG. 1B, the glass manufacturing apparatus 1b according to some embodiments may include a direct cooling system 400b. The direct cooling system 400b includes a plurality of nozzles 410. According to some embodiments, distances between neighboring nozzles 410 may be different from each other. According to some embodiments, a distance between some of neighboring nozzles 410 may be greater than a distance between other neighboring nozzles 410. According to some embodiments, a cooling efficiency may be improved by arranging the nozzles 410 at a density according to a degree required to cool the third conduit 350.

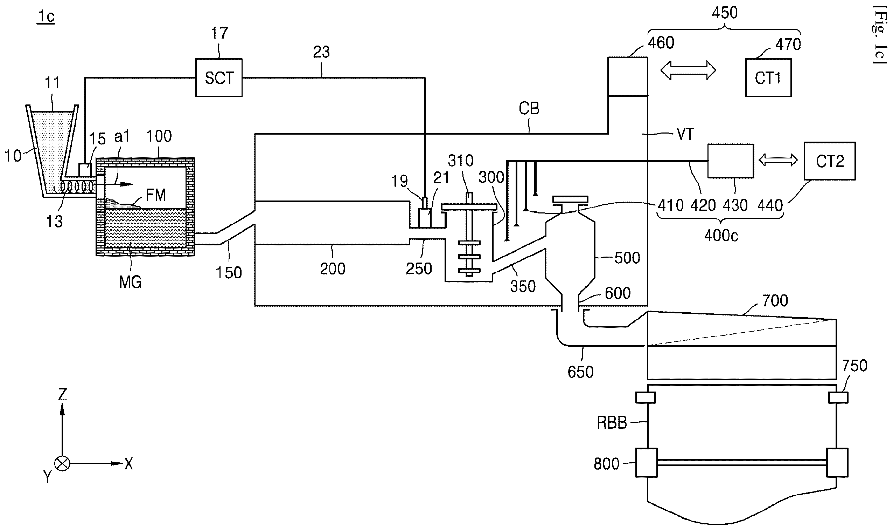

Referring to FIG. 1C, the glass manufacturing apparatus 1c according to some embodiments may include a direct cooling system 400c. The direct cooling system 400c includes a plurality of nozzles 410. According to some embodiments, distances between neighboring nozzles 410 may be different from each other. According to some embodiments, a distance between each of the nozzles 410 and the third conduit 350 may be different from each other. According to some embodiments, a distance between each of some of the nozzles 410 and the third conduit 350 may be greater than a distance between each of other nozzles 410 and the third conduit 350.

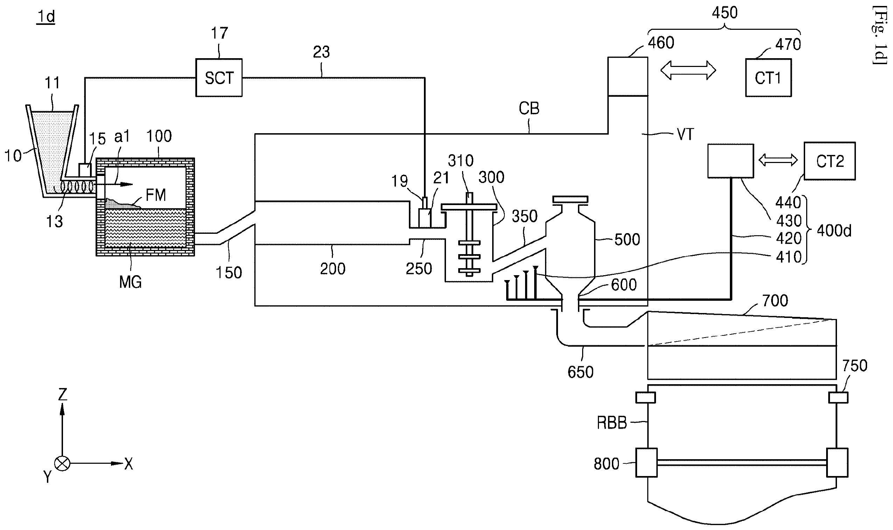

Referring to FIG. 1D, the glass manufacturing apparatus 1d according to some embodiments may include a direct cooling system 400d. The direct cooling system 400d includes a plurality of nozzles 410. According to some embodiments, the nozzles 410 may be disposed below the third conduit 350. According to some embodiments, the fluid jetted by the nozzles 410 may reach a lower surface of the third conduit 350. According to some embodiments the fluid jetted by the nozzle 410 may reach at least a portion of the lower surface of the third conduit 350. According to some embodiments, an area covered by the fluid jetted by the nozzle 410 may be equal to or greater than an area corresponding to the lower surface of the third conduit 350. According to some embodiments, the fluid jetted by the nozzles 410 may substantially cover the entire lower surface of the third conduit 350. However, this embodiment is not limited thereto, and in some cases, some of the fluid jetted by the nozzle 410 may reach the upper surface of the third conduit 350.

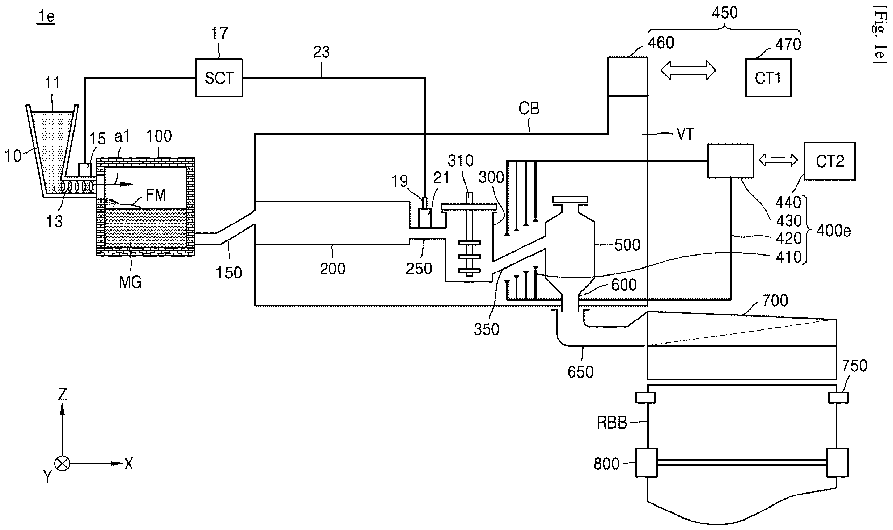

Referring to FIG. 1E, the glass manufacturing apparatus 1e according to some embodiments may include a direct cooling system 400e. The direct cooling system 400e includes a plurality of nozzles 410. According to some embodiments, some of the nozzles 410 may be disposed above the third conduit 350. According to some embodiments, some of the nozzles 410 may be disposed below the third conduit 350. According to some embodiments, the fluid jetted by the nozzles 410 may reach upper and lower surfaces of the third conduit 350. According to some embodiments, the fluid jetted by the nozzles 410 may substantially cover the entire outer surface of the third conduit 350. A number of nozzles 410 disposed above third conduit 350 may be equal to a number of nozzles 410 disposed below the third conduit 350. In some embodiments, the nozzles 410 disposed above the third conduit 350 may vertically overlap the nozzles 410 disposed below the third conduit 350. According to some embodiments, the horizontal arrangement of the nozzles 410 disposed above the third conduit 350 is substantially the same as the horizontal arrangement of the nozzles 410 disposed below the third conduit 350. According to some embodiments, by arranging the nozzles 410 above and below the third conduit 350, the cooling efficiency may be further increased.

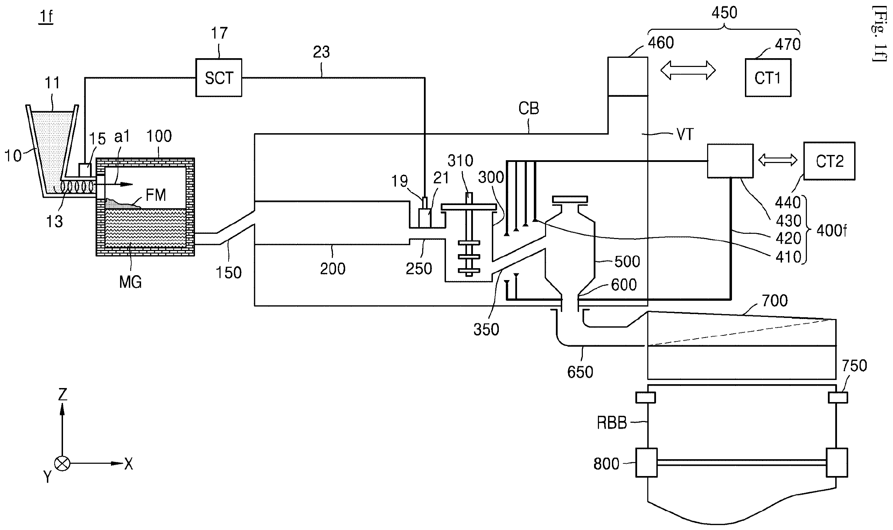

Referring to FIG. 1F, the glass manufacturing apparatus 1f according to some embodiments may include a direct cooling system 400f. The direct cooling system 400f includes a plurality of nozzles 410. According to some embodiments, some of the nozzles 410 may be disposed above the third conduit 350. According to some embodiments, some of the nozzles 410 may be disposed below the third conduit 350. According to some embodiments, a number of the nozzles 410 disposed above the third conduit 350 may be greater than a number of the nozzles 410 disposed below the third conduit 350. According to some embodiments, when more cooling is required, nozzles 410 may be additionally provided below the portion of the third conduit 350 to further increase the cooling efficiency. Referring to FIG. 1F, nozzles 410 may be additionally provided below the portion of the third conduit 350 adjacent to the stirring vessel 300, but this aspect is not limited thereto. According to some embodiments nozzles 410 may be additionally provided below the portion of the third conduit 350 adjacent to the delivery vessel 500 or below the substantially central portion of the third conduit 350.

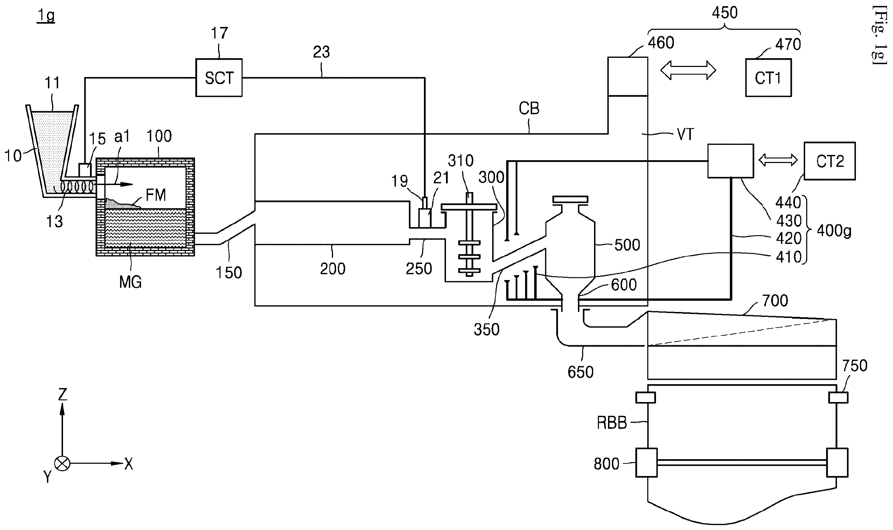

Referring to FIG. 1G, the glass manufacturing apparatus 1g according to some embodiments may include a direct cooling system 400g. The direct cooling system 400g includes a plurality of nozzles 410. According to some embodiments, some of the nozzles 410 may be disposed above the third conduit 350. According to some embodiments, some of the nozzles 410 may be disposed below the third conduit 350. According to some embodiments, a number of the nozzles 410 disposed below the third conduit 350 may be greater than a number of the nozzles 410 disposed above the third conduit 350. According to some embodiments, when more cooling efficiency is required, nozzles 410 may be additionally provided above the portion of the third conduit 350 to further increase the cooling efficiency. Referring to FIG. 1F, nozzles 410 may be additionally provided above the portion of the third conduit 350 adjacent to the stirring vessel 300, but this aspect is not limited thereto. According to some embodiments nozzles 410 may be additionally provided above the portion of the third conduit 350 adjacent to the delivery vessel 500 or above the substantially central portion of the third conduit 350.

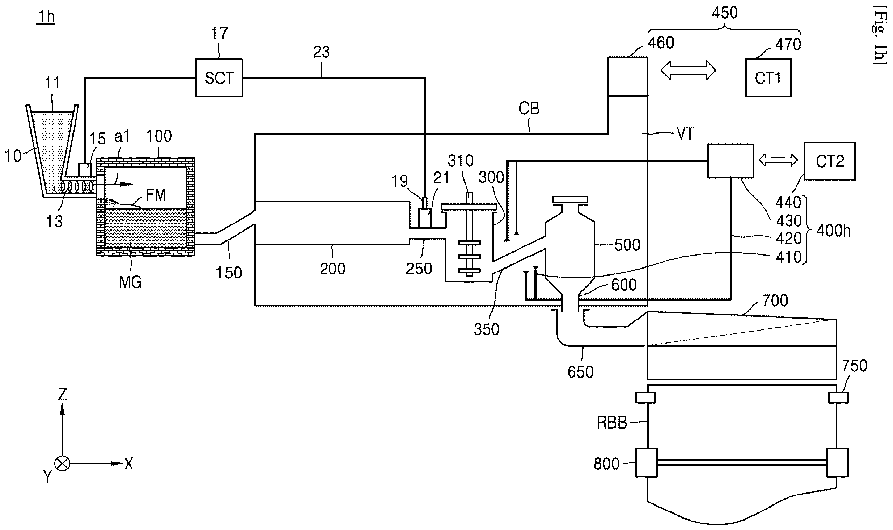

Referring to FIG. 1H, the glass manufacturing apparatus 1h according to some embodiments may include a direct cooling system 400h. The direct cooling system 400h includes a plurality of nozzles 410. According to some embodiments, some of the nozzles 410 may be disposed above the third conduit 350. According to some embodiments, some of the nozzles 410 may be disposed below the third conduit 350. According to some embodiments, a number of the nozzles 410 disposed above the third conduit 350 may be equal to a number of the nozzles 410 disposed below the third conduit 350. The horizontal arrangement of the nozzles 410 disposed above the third conduit 350 may be different from the horizontal arrangement of the nozzles 410 disposed below the third conduit 350. According to some embodiments, at least some of the nozzles 410 disposed above the third conduit 350 may not vertically overlap with the nozzles 410 disposed below the third conduit 350.

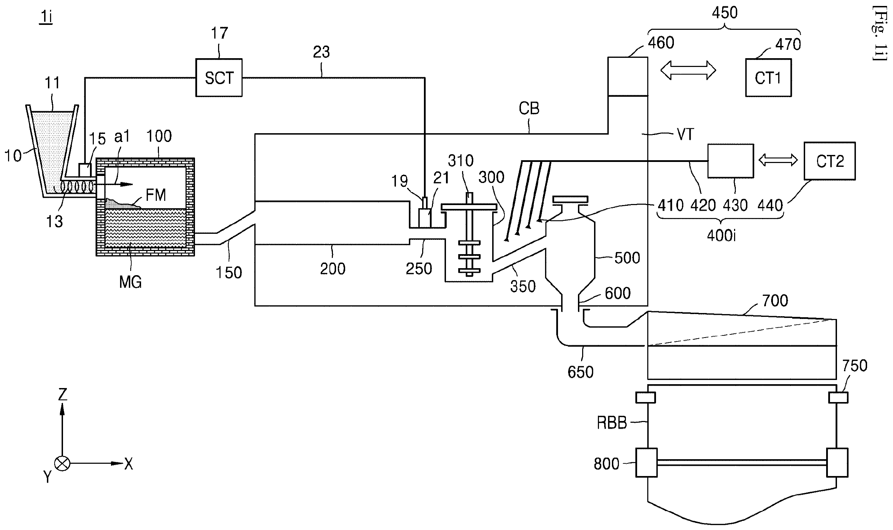

Referring to FIG. 1I, the glass manufacturing apparatus 1i according to some embodiments may include a direct cooling system 400i. The direct cooling system 400i includes a plurality of nozzles 410. According to some embodiments, the nozzles 410 may be oriented in a direction inclined with respect to a horizontal plane. The orientation of the nozzles 410 is defined by an angle between longitudinal axes (e.g., jetting axes) of the nozzles 410 with respect to the horizontal plane. Accordingly, the nozzles 410 jet fluid at an angle with respect the horizontal plane. According to some embodiments, the nozzles 410 may be oriented in a direction inclined with respect to the bottom surface of the chamber CB. According to some embodiments, the nozzles 410 may jet a fluid in a direction inclined with respect to the third direction (the Z direction).

Referring to FIG. 3A and 3B, the glass manufacturing apparatus according to some embodiments may include a direct cooling system including a plurality of nozzles 410. For convenience of explanation, only the stirring vessel 300, the third conduit 350, and the delivery vessel 500 are shown in FIG. 3A. FIG. 3B is a plan view of FIG. 3A. According to some embodiments, the nozzle 410 comprises a plurality of nozzles. According to some embodiments, the plurality of nozzles 410 may be arranged along a first direction (an X direction). According to some embodiments, the plurality of nozzles 410 may be arranged along a second direction (a Y direction). The plurality of nozzles 410 may be arranged in rows and columns in the first and second directions (the X direction and the Y direction) so that horizontal positions of the plurality of nozzles 410 form a matrix. According to some embodiments, distances between neighboring nozzles 410 may be substantially equal to each other. According to some embodiments, distances between each of the nozzles 410 and the third conduit 350 may be substantially equal to each other.

Referring again to FIG. 1A, the nozzle 410 may receive a fluid from the fluid source 430 through the fluid conduit 420. According to some embodiments, the fluid jetted by the nozzle 410 may be different from the fluid provided by the environmental control unit 460. According to some embodiments, the fluid jetted by the nozzle 410 may be fed directly from the fluid source 430, without passing through the environment control unit 460. According to some embodiments, the fluid jetted by the nozzles 410 and the fluid provided by the environmental control unit 460 may differ in at least one of a temperature, a humidity, and an atmospheric composition ratio.

According to some embodiments, the nozzle 410 may be configured to jet a fluid around the third conduit 350 to cool the third conduit 350. According to some embodiments, the nozzle 410 may be configured to jet nitrogen for cooling to the third conduit 350. According to some embodiments, a fluid source 430 may include a nitrogen source. According to some embodiments, the nozzle 410 is configured to jet high purity nitrogen (e.g., a ratio of a partial pressure of nitrogen is 99.9% or greater). According to some embodiments, the nozzle 410 may jet a fluid for humidity control. According to some embodiments, the nozzle 410 may jet H ₂O. According to some embodiments, the nozzle 410 may spray H ₂O. According to some embodiments, the nozzle 410 may spray H ₂O, which is a vaporized state or in a fine liquid particle state. According to some embodiments, the nozzle 410 may jet H ₂O in a vapor state and H ₂ O in a fine liquid particle state. According to some embodiments, the fluid source 430 may include an H ₂O source. According to some embodiments, the nozzle 410 may jet nitrogen and H ₂O at the same time. According to some embodiments, the nozzle 410 may include a regulator for regulating the jet of nitrogen. According to some embodiments, a regulator for regulating the jet of nitrogen may regulate at least one of start and stop, velocity, and flow rate of nitrogen. According to some embodiments, the nozzle 410 may include a regulator for regulating the jet or spray of H ₂O. A regulator for regulating the jet or spray of H ₂O may regulate at least one of the start and stop, speed, and flow rate of H ₂O.

The second controller 440 may generate certain instructions to control the direct cooling system 400a. According to some embodiments, the second controller 440 may include a processor capable of issuing various commands to control a state of the third conduit 350. According to some embodiments, the second controller 440 may control the jet of the nozzles 410. According to some embodiments, the second controller 440 may also control a flow (a flow rate, for example) of the fluids jetted by the nozzles 410. According to some embodiments, the second controller 440 may control the temperature of the molten glass MG contained in the third conduit 350. According to some embodiments, the second controller 440 may be a computing device, such as a workstation computer, a desktop computer, a laptop computer, a tablet computer, and the like. According to some embodiments, the second controller 440 may store software for performing functions such as receiving feedback on the state of the molten glass MG in the third conduit 350 and receiving measurement data for adjusting the jet of the nozzles 410. According to some embodiments, temperature sensors are provided to measure the temperature of the molten glass MG, and the second controller 440 may adjust the temperature of the molten glass MG in the third conduit 350 based on temperature measurement results of the temperature sensors through feedback control. For example, when the temperature of the molten glass is higher than a required value, the amount of the fluid jetted by the nozzle 410 may be increased. On the other hand, when the temperature of the molten glass MG is lower than the required value, the amount of the fluid jetted by the nozzle 410 may be decreased.

According to some embodiments, the second controller 440 may control at least one of a type, a composition, a velocity, a flow rate, and an area of reach for the third conduit 350 of fluid to be jetted. Thus, the amount of the fluid reaching the third conduit may be controlled, and accordingly, cooling of the third conduit may be controlled.

According to some embodiments, the second controller 440 may be provided separately from the first controller 470. The second controller 440 may be separated from the first controller 470. According to some embodiments, the first controller 470 and the second controller 440 may be separate processors and/or software components included in an identical computing device such as a workstation computer, a desktop computer, laptop computer, and a tablet computer, etc.

The cooling process is a process of lowering the temperature of the molten glass MG. Conventionally, the environment control unit 460 cools the molten glass MG in the third conduit 350 by circulation of the fluid provided to the chamber CB. In this case, as fluid flow stagnation occurs around the third conduit 350, the heat exchange between the fluid in the chamber CB and the third conduit 350 is poor so that the cooling efficiency is low. Conventionally, conduits including refractories have been researched to improve the cooling efficiency. However, the improvement in the cooling efficiency has not been significant. As a result, the cooling process has lowered the production efficiency of glass.

To address this problem, the glass manufacturing apparatus 1a according to some embodiments may include a plurality of nozzles 410 configured to jet fluid directly to the third conduit 350 separately from the environment control unit 460 in the chamber CB. Accordingly, the cooling efficiency for the molten glass MG in the third conduit 350 may be improved. Specifically, by jetting the fluid around the third conduit 350, the jetted fluid can push out the airflow surrounding layer around the third conduit 350. Thus, it is possible to prevent stagnation of fluid from being formed around the third conduit 350.

The atmosphere of the chamber CB for glass production requires precise control. Therefore, it is desirable that the atmospheric environment of the chamber CB for glass production does not change due to nitrogen provided by the nozzles 410. Therefore, by reducing the amount of nitrogen supplied by the environment control unit 460 via the amount of nitrogen supplied by the nozzle 410, the atmospheric composition (such as partial pressures of component gases), the temperature, and the humidity in the entire chamber CB may be maintained at levels equivalent to the conventional ones. A partial pressure of oxygen and a total pressure in the chamber CB may be maintained at predetermined values in order to prevent needle Pt defects from occurring due to changes in the atmosphere of the chamber CB. Because the temperature inside the first to third conduit 350 is very high, platinum may combine with oxygen and become volatilized in the form of PtO ₂. When the volatilized PtO ₂ is cooled and encounters nitrogen, NO is formed and Pt solidifies and remains in the molten glass. Needle Pt is a needle-like defect formed in a glass product caused by solid Pt contained in the molten glass. To this end, the total amount of nitrogen jetted by the nozzle 410 may be less than the amount of nitrogen provided by the environment control unit 450. However, this embodiment is not limited thereto and depending on the process conditions and environment, the total amount of nitrogen jetted by the nozzle 410 may be greater than the amount of nitrogen provided by the environment control unit 450.

The high purity nitrogen jetted by the nozzle 410 may have lower humidity than the atmosphere in the entire chamber, thereby causing a local humidity drop around the third conduit 350. According to some embodiments, the nozzles 410 may adjust the humidity around the third conduit 350 by spraying H ₂O around the third conduit 350. Accordingly, defects such as blister may be prevented from occurring due to a hydrogen permeation phenomenon on high-temperature platinum which may occur in a drying environment. The molten glass inside the conduit has a relatively high concentration of hydrogen. Because the atomic mass and atomic size of H ₂ are very small, H ₂ molecules are capable of travelling through platinum-based conduits or vessels. This phenomenon is referred to as hydrogen permeation. The hydrogen concentration in the chamber CB is maintained at a certain level to prevent permeation of hydrogen. The external hydrogen concentration is controlled through humidity, and when the local hydrogen concentration outside the conduit drops, the possibility of hydrogen permeation increases. Because hydrogen exists in the form of OH- ion inside the molten glass, when H ₂ permeation occurs, O ₂ remains in the molten glass and causes blister defects in glass products.

Fig. 2 is a graph for explaining the effect of the glass manufacturing apparatus 1a (see Fig. 1a) according to an experimental example.

Referring to FIGS. 1A and 2, in the experimental example, when the nitrogen flow rate through the nozzle 410 was about 480 L/min, the cooling power of the third conduit increased by about 7.6 kW. By extrapolation to a case where the nozzle 410 jets the maximum amount of nitrogen, it is expected that an additional cooling power of about 13.2 kW will be obtained.

As the flow rate of the glass increased by about 45.36 kg/hr as the cooling power of the third conduit 350 in glass manufacturing increased by about 5.0 kW, the glass manufacturing apparatus 1a according to some embodiments is estimated to be capable of increasing the flow rate of the glass by about *93.44* kg/hr.

According to the experimental example, it was confirmed that there is no side effect such as a change of the glass flow due to introduction of the nozzle 410, an increase of the number of defects, a deterioration of the quality of the produced glass products, and the like. Specifically, the total amount of glass lost by melting in the glass manufacturing process was reduced from 4.4% in the conventional example to 4.38% in the experimental example. Melting loss of glass means the percentage of products with defects such as blister or needle Pt, etc to the gross production.

FIG. 4 is a flow chart for explaining a glass manufacturing method according to some embodiments.

Referring to FIGS. 1A and 4, the method of manufacturing glass may include stirring molten glass MG in a stirring vessel 300 (P1010), flowing the stirred molten glass MG through a conduit 350(P1020), and jetting fluid around the conduit 350 (P1030). The stirring (P1010) the molten glass MG is carried out in the stirring vessel 300 as described with reference to Fig. 1A. The jet (P1030) of the fluid around the conduit 300 is the same as described with reference to FIGS. 1A to 1I and FIG. 3A and 3B.

While the present disclosure has been particularly shown and described with reference to example embodiments thereof, it will be understood that various changes in form and details may be made therein without departing from the scope of the following claims.

## Claims

1. A glass manufacturing apparatus (1a) comprising:
a stirring vessel (300) disposed in a chamber (CB) and configured to stir molten glass;
a conduit arranged (350) in the chamber (CB) and having an inner space through which molten glass from the stirring vessel flows (300); and
a nozzle (410) disposed in the chamber (CB) adjacent to the conduit (350) and configured to jet a fluid around the conduit (350);
**characterized by** an environment control unit (460) configured to adjust environment parameters inside the chamber.

2. The glass manufacturing apparatus (1a) of claim 1, wherein the nozzle (410) is connected to a nitrogen source.

3. The glass manufacturing apparatus (1a) of claim 2, wherein the nitrogen source is configured to provide nitrogen, which has not passed through the environmental control unit (460), to the nozzle (410).

4. The glass manufacturing apparatus (1a) of claim 1, wherein the environment control unit (460) is connected to the chamber (CB) and further configured to supply the chamber (CB) with a fluid having a predetermined humidity, temperature, and atmospheric composition ratio.

5. The glass manufacturing apparatus (1a) of claim 1, wherein the environment control unit (460) is further configured to provide a fluid to the chamber (CB), wherein the fluid jetted by the nozzle (410) and the fluid provided by the environment control unit (460) differ in at least one of a temperature, a humidity, and an atmospheric composition ratio.

6. The glass manufacturing apparatus (1a) of claim 1, further comprising:
a first controller (470) configured to control the environment control unit (460); and
a second controller (440) configured to control a flow of the fluid jetted by the nozzle (410).

7. The glass manufacturing apparatus (1a) of claim 7, wherein the first controller (470) and the second controller (440) are separate from each other

8. The glass manufacturing apparatus (1a) of claim 1, wherein the nozzle (410) is configured to jet the fluid at an angle with respect to a horizontal plane.

9. The glass manufacturing apparatus (1a) of claim 8, wherein the nozzle (410) is configured to jet the fluid in a direction substantially perpendicular to a horizontal plane.

10. A glass manufacturing apparatus (1a) comprising:
a conduit (350) arranged in a chamber (CB) and having an inner space through which molten glass flows from a stirring vessel (300) disposed in the chamber (CB) and extending in a first direction; and
a plurality of nozzles (410) configured to jet a fluid around the conduit (350),
wherein the plurality of nozzles (410) are disposed in the chamber (CB) and arranged along the first direction;
**characterized by** an environment control unit (460) configured to adjust environment parameters inside the chamber (CB).

11. The glass manufacturing apparatus of claim 10, wherein the plurality of nozzles (410) are arranged at substantially equal intervals along an extension direction of the conduit (350).

12. The glass manufacturing apparatus of claim 10, wherein the plurality of nozzles (410) are arranged at different intervals along an extension direction of the conduit (350).

13. The glass manufacturing apparatus of claim 10, wherein at least some of the plurality of nozzles (410) are disposed above the conduit (350).

14. The glass manufacturing apparatus of claim 10, wherein at least some of the plurality of nozzles (410) are disposed below the conduit (350).

## Patentansprüche

1. Vorrichtung (1a) zum Herstellen von Glas, umfassend:
ein Rührgefäß (300), das in einer Kammer (CB) positioniert und zum Rühren von geschmolzenem Glas konfiguriert ist;
eine Röhre (350), die in der Kammer (CB) angeordnet ist und einen Innenraum aufweist, durch den geschmolzenes Glas aus dem Rührgefäß (300) fließt, und
eine Düse (410), die in der Kammer (CB) benachbart zu der Röhre (350) positioniert und dazu konfiguriert ist, ein Fluid um die Röhre (350) herum auszustoßen;
**gekennzeichnet durch** eine Umgebungssteuereinheit (460), die dazu konfiguriert ist, Umgebungsparameter innerhalb der Kammer anzupassen.

2. Vorrichtung (1a) zum Herstellen von Glas nach Anspruch 1, wobei die Düse (410) mit einer Stickstoffquelle verbunden ist.

3. Vorrichtung (1a) zum Herstellen von Glas nach Anspruch 2, wobei die Stickstoffquelle dazu konfiguriert ist, Stickstoff, der nicht durch die Umgebungssteuereinheit (460) gelangt ist, der Düse (410) bereitzustellen.

4. Vorrichtung (1a) zum Herstellen von Glas nach Anspruch 1, wobei die Umgebungssteuereinheit (460) mit der Kammer (CB) verbunden und ferner dazu konfiguriert ist, die Kammer (CB) mit einem Fluid zu versorgen, das eine vorbestimmte Feuchtigkeit, Temperatur und ein vorbestimmtes atmosphärisches Zusammensetzungsverhältnis aufweist.

5. Vorrichtung (1a) zum Herstellen von Glas nach Anspruch 1, wobei die Umgebungssteuereinheit (460) ferner dazu konfiguriert ist, der Kammer (CB) ein Fluid bereitzustellen, wobei das durch die Düse (410) ausgestoßene Fluid und das durch die Umgebungssteuereinheit (460) bereitgestellte Fluid sich in mindestens einem von einer Temperatur, einer Feuchtigkeit und einem atmosphärischen Zusammensetzungsverhältnis unterscheiden.

6. Vorrichtung (1a) zum Herstellen von Glas nach Anspruch 1, ferner umfassend:
eine erste Steuerung (470), die dazu konfiguriert ist, die Umgebungssteuereinheit (460) zu steuern; und
eine zweite Steuerung (440), die dazu konfiguriert ist, einen Fluss des durch die Düse (410) ausgestoßenen Fluids zu steuern.

7. Vorrichtung (1a) zum Herstellen von Glas nach Anspruch 7, wobei die erste Steuerung (470) und die zweite Steuerung (440) voneinander getrennt sind.

8. Vorrichtung (1a) zum Herstellen von Glas nach Anspruch 1, wobei die Düse (410) dazu konfiguriert ist, das Fluid in einem Winkel in Bezug auf eine horizontale Ebene auszustoßen.

9. Vorrichtung (1a) zum Herstellen von Glas nach Anspruch 8, wobei die Düse (410) dazu konfiguriert ist, das Fluid in eine Richtung auszustoßen, die im Wesentlichen senkrecht zu einer horizontalen Ebene liegt.

10. Vorrichtung (1a) zum Herstellen von Glas, umfassend:
eine Röhre (350), die in einer Kammer (CB) angeordnet ist und einen Innenraum aufweist, durch den geschmolzenes Glas aus einem Rührgefäß (300), das in der Kammer (CB) positioniert ist, fließt, und die sich in eine erste Richtung erstreckt; und
eine Vielzahl von Düsen (410), die dazu konfiguriert sind, ein Fluid um die Röhre (350) herum auszustoßen,
wobei die Vielzahl von Düsen (410) in der Kammer (CB) positioniert und entlang der ersten Richtung angeordnet sind;
**gekennzeichnet durch** eine Umgebungssteuereinheit (460), die dazu konfiguriert ist, Umgebungsparameter innerhalb der Kammer (CB) anzupassen.

11. Vorrichtung zum Herstellen von Glas nach Anspruch 10, wobei die Vielzahl von Düsen (410) in im Wesentlichen gleichen Abständen entlang einer Erstreckungsrichtung der Röhre (350) angeordnet sind.

12. Vorrichtung zum Herstellen von Glas nach Anspruch 10, wobei die Vielzahl von Düsen (410) in unterschiedlichen Abständen entlang einer Erstreckungsrichtung der Röhre (350) angeordnet sind.

13. Vorrichtung zum Herstellen von Glas nach Anspruch 10, wobei mindestens einige der Vielzahl von Düsen (410) über der Röhre (350) positioniert sind.

14. Vorrichtung zum Herstellen von Glas nach Anspruch 10, wobei mindestens einige der Vielzahl von Düsen (410) unter der Röhre (350) positioniert sind.

## Revendications

1. Appareil de fabrication de verre (1a) comprenant :
une cuve d'agitation (300) disposée dans une chambre (CB) et configurée pour agiter du verre fondu ;
un conduit disposé (350) dans la chambre (CB) et comportant un espace intérieur à travers lequel s'écoule le verre fondu provenant de la cuve d'agitation (300) ; et
une buse (410) disposée dans la chambre (CB) adjacente au conduit (350) et configurée pour projeter un fluide autour du conduit (350) ;
**caractérisé par** une unité de contrôle environnemental (460) configurée pour ajuster des paramètres d'environnement à l'intérieur de la chambre.

2. Appareil de fabrication de verre (1a) selon la revendication 1, dans lequel la buse (410) est connectée à une source d'azote.

3. Appareil de fabrication de verre (1a) selon la revendication 2, dans lequel la source d'azote est configurée pour fournir de l'azote, qui n'a pas traversé l'unité de contrôle environnemental (460), à la buse (410).

4. Appareil de fabrication de verre (1a) selon la revendication 1, dans lequel l'unité de contrôle environnemental (460) est connectée à la chambre (CB) et en outre configurée pour alimenter la chambre (CB) avec un fluide comportant une humidité, une température et un rapport de composition atmosphérique prédéterminés.

5. Appareil de fabrication de verre (1a) selon la revendication 1, dans lequel l'unité de contrôle environnemental (460) est en outre configurée pour fournir un fluide à la chambre (CB), dans lequel le fluide projeté par la buse (410) et le fluide fourni par l'unité de contrôle environnemental (460) diffèrent par au moins l'un d'une température, d'une humidité et/ou d'un rapport de composition atmosphérique.

6. Appareil de fabrication de verre (1a) selon la revendication 1, comprenant en outre :
un premier contrôleur (470) configuré pour commander l'unité de contrôle environnemental (460) ; et
un deuxième contrôleur (440) configuré pour commander un débit du fluide projeté par la buse (410).

7. Appareil de fabrication de verre (1a) selon la revendication 7, dans lequel le premier contrôleur (470) et le deuxième contrôleur (440) sont séparés l'un de l'autre.

8. Appareil de fabrication de verre (1a) selon la revendication 1, dans lequel la buse (410) est configurée pour projeter le fluide selon un angle par rapport à un plan horizontal.

9. Appareil de fabrication de verre (1a) selon la revendication 8, dans lequel la buse (410) est configurée pour projeter le fluide dans une direction sensiblement perpendiculaire à un plan horizontal.

10. Appareil de fabrication de verre (1a) comprenant :
un conduit (350) disposé dans une chambre (CB) et comportant un espace intérieur à travers lequel le verre fondu s'écoule depuis une cuve d'agitation (300) disposée dans la chambre (CB) et s'étendant dans une première direction ; et
une pluralité de buses (410) configurées pour projeter un fluide autour du conduit (350),
dans lequel la pluralité de buses (410) sont disposées dans la chambre (CB) et agencées le long de la première direction ;
**caractérisé par** une unité de contrôle environnemental (460) configurée pour ajuster des paramètres d'environnement à l'intérieur de la chambre (CB).

11. Appareil de fabrication de verre selon la revendication 10, dans lequel la pluralité de buses (410) sont agencées à des intervalles sensiblement égaux le long d'une direction d'extension du conduit (350).

12. Appareil de fabrication de verre selon la revendication 10, dans lequel la pluralité de buses (410) sont agencées à différents intervalles le long d'une direction d'extension du conduit (350).

13. Appareil de fabrication de verre selon la revendication 10, dans lequel au moins certaines de la pluralité de buses (410) sont disposées au-dessus du conduit (350).

14. Appareil de fabrication de verre selon la revendication 10, dans lequel au moins certaines de la pluralité de buses (410) sont disposées sous le conduit (350).
